Europäisches Patentamt

European Patent Office

Office européen des brevets

(19)

(11) Publication number: 0 392 598

A1

## (12) EUROPEAN PATENT APPLICATION

(21) Application number: 90200815.0

(22) Date of filing: 05.04.90

(51) Int. Cl.5: **G01B 7/14, F16N 29/00, F16C 27/00**

The title of the invention has been amended (Guidelines for Examination in the EPO, A-III, 7.3).

(30) Priority: **14.04.89 NL 8900932**

(43) Date of publication of application: **17.10.90 Bulletin 90/42**

(84) Designated Contracting States: **DE ES FR GB IT NL SE**

(71) Applicant: **SKF Industrial Trading & Development Co, B.V.**
**Kelvinbaan 16**
**NL-3439 MT Nieuwegein(NL)**

(72) Inventor: **Blond, Alejandro**
**General Diaz Porlier 73, 5e dcha**
**Madrid(ES)**
Inventor: **Tadic, Vedran**
**Julianalaan 12**
**Culemborg(NL)**
Inventor: **Poll, Gerhard**
**Schonenburgseind 95**
**Houten(NL)**

(74) Representative: **Merkelbach, B.**
**SKF Engineering & Research Centre B.V.**
**P.O. Box 2350 Kelvinbaan 16**
**NL-3430 DT Nieuwegein(NL)**

(54) **Method and device for measuring the thickness of a lubricant film.**

(57) The improvement consists therein that a lubricant film can be measured in the 0.1-20 micron area with a high degree of accuracy. Thereto, between two rotating parts i.e. the shaft (1) and the seal (2), a lubricant film (3) is present whereby in the shaft a sensor (4) with an annular core (5) is applied. A coil (6) is arranged around the core (5). At the outward extension of the core polar pieces (7,8) are located which free ends are directed to the lubricant film to be measured. When an alternating current is supplied to the core (6) a magnetic field is generated which field lines are indicated by dotted lines (10).

By adding magnetic particles to the lubricant it will acquire much greater magnetic permeability than air so that the magnetic field will much more be concentrated in the lubricant film.

## Method and device for measuring the thickness of a lubricant film

The invention concerns a method for measuring the thickness of a lubricant film between two surfaces which are in motion with regard to one another, as well as a device for applying this method.

Various embodiments of methods and devices of this type are known. Although the traditional methods and devices yield satisfactory measurements, they present the disadvantage that precise measurements are no longer possible with a thin lubricant film in the sub-micron area.

The invention aims in the first place at creating a method of the type referred to above, which does not present this disadvantage.

For this purpose the method according to the invention is characterized by the fact that a lubricant with high relative permeability is used whereby the polar pieces of an electromagnetic sensor are brought into contact with the lubricant film to be measured in such manner that they are bridged by the lubricant film.

Accordingly, this method takes advantage of the fact that the magnetic permeability of the lubricant film is different from that of air, so that the impedance of the electromagnetic sensor is determined by the thickness of the lubricant film. The impedance of the sensor may be determined by means of the usual circuits, e.g., by incorporating the coil of the sensor in a bridge circuit which is fed along one diagonal by an alternating current source, whereby an output signal can be captured on the other diagonal, which signal is dependent on the impedance of the sensor.

The invention provides also a device for the application of the method, which device according to the invention is characterized by an electromagnetic sensor mounted in the one surface at the site of the lubricant film to be measured, which sensor is equipped with a coil wound around a core whereby the core is executed with polar pieces ending in the plane of the one surface, which polar pieces are bridged by the lubricant film to be measured.

According to one embodiment of the invention the one surface may be the casing surface of a shaft whereby, according to the invention, the sensor is executed with an annular core with a more or less U-shaped cross-section, which annular core is contained in the shaft, whereby the outwardly directed extensions of the core are located with their free ends in the casing surface of the shaft.

A device executed in this manner can be used advantageously for measuring the thickness of the lubricant film underneath the sealing lip of a seal, e.g., a bearing seal.

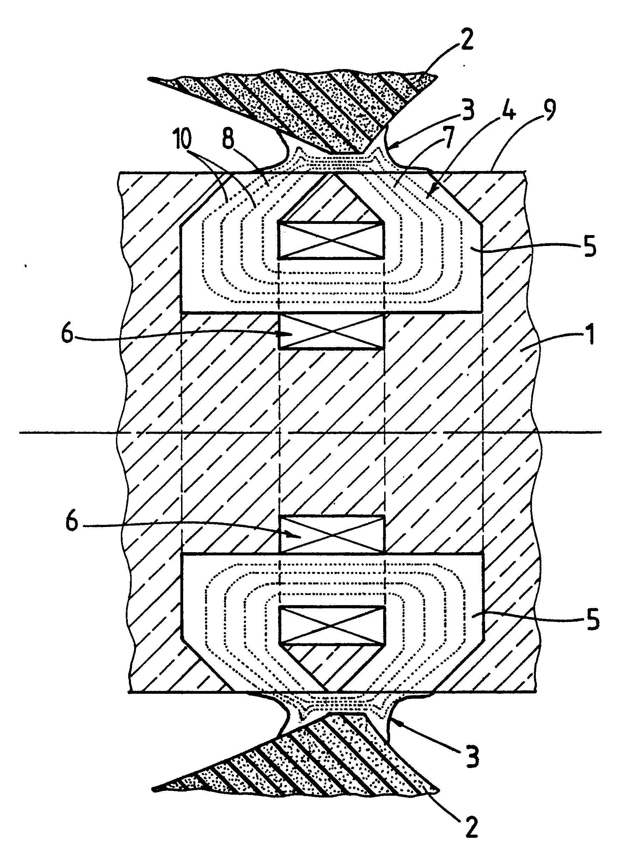

The invention is further explained with the aid of the drawing, which presents an embodiment of the invention in a highly schematic fashion.

The drawing shows a shaft 1 in section, and the sealing lip 2 of a seal - not further shown - e.g., a bearing seal. A lubricant film 3 whose thickness has to be measured, extends between the sealing lip 2 and the shaft 1. The shaft 1 and the seal 2 consist of a material with low magnetic permeability.

According to the invention a lubricant with high relative magnetic permeability is used; which can be achieved, e.g., by adding magnetic particles to the lubricant. As a result, the lubricant acquires much greater magnetic permeability than air so that any magnetic field will concentrate in the lubricant.

The shaft 1 contains an electromagnetic sensor 4 which is executed with an annular core 5 with a generally U-shaped cross-section, which core is formed of iron, for example. A coil 6 is wound around the body of core 5. The outwardly directed extensions of core 5 form the polar pieces 7, 8, whose free ends are located in the casing surface 9 of the shaft 1 at the site of the lubricant film 3. The gap between the polar pieces 7, 8 is bridged by the lubricant film 3.

When an alternating current is supplied to the core 6, a magnetic field is generated whose field lines are indicated by dotted lines 10. The impedance of core 6 depends on the thickness of the lubricant film 3. Tests have shown that by means of a similar sensor 4 the thickness of a lubricant film can be measured in the 0.1 - 20 micron area with a high degree of accuracy.

The core may be incorporated, for example, in a bridge circuit whereby an alternating current source is connected to the one diagonal while an output signal may be captured at the other diagonal, which output signal is linearly dependent on the thickness of the lubricant film 3.

The electromagnetic sensor may also be executed in a different manner, e.g., a pot-shaped element with a central core, whereby a coil is wound on the central core and this central core, together with the cylindrical outside wall of the pot-shaped element, defines an annular gap which is bridged by the lubricant film to be measured.

Consequently, the invention is not limited to the embodiment described above; the latter can be varied in different ways within the framework of the invention.

## Claims

1. Method for measuring the thickness of a lubricant film (3) between two surfaces which are in motion with regard to one another, characterized by the fact that a lubricant with high relative permeability is used, whereby the polar pieces (7, 8) of an electromagnetic sensor (5, 6) are brought into contact with the lubricant film (3) to be measured in such manner that they are bridged by the lubricant film.

2. Method according to Claim 1, characterized by the fact that a lubricant with magnetic particles is used.

3. Device for applying the method according to Claims 1 or 2, characterized by an electromagnetic sensor (5, 6) mounted in the one surface (9) at the site of the lubricant film (3) to be measured, which sensor is executed with a coil (6) wound on a core (5), whereby the coil is equipped with polar pieces (7, 8) ending in the plane of the one surface, which polar pieces are bridged by the lubricant film (3) to be measured.

4. Device according to Claim 3 whereby the one surface (9) is the casing surface of a shaft (1), characterized by the fact that the sensor (5, 6) is executed with an annular core (5) with a more or less U-shaped cross-section, which annular core is contained in the shaft (1), whereby the outwardly directed extensions of the core (5) are located with their free ends in the casing surface (9) of the shaft (1).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A- 852 230 (CKD BLANSKO; ZAVODY JIRIHO DIMTROVA, NARODNI PODNIK) * Entire document * | 1,2,3,4 | G 01 B 7/14 F 16 N 29/00 F 16 C 27/00 |
| Y | MECHANICAL ENGINEERING, vol. 97, no. 2, February 1975, pages 30-36; R. MOSKOWITZ: "Designing with ferrofluids" * Page 30, line 1 - page 33, left-hand column * | 1,2,3,4 | |
| A | GB-A-1 148 064 (ENGLISH ELECTRIC CO.)(10-04-1969) * Entire document * | 1-4 | |
| A | JOURNAL OF SCIENTIFIC INSTRUMENTS (JOURNAL OF PHYSICS E), series 2, vol. 1, no. 7, July 1968, pages 767-768; P.E. WINNEY: "The thickness measurement of thin fluid films by a magnetic reluctance technique" | 1,3,4 | |
| A | JOURNAL OF SCIENTIFIC INSTRUMENTS (JOURNAL OF PHYSICS E), vol. 3, no. 7, July 1970, pages 507-510; S.Y. POON: "An improved magnetic reluctance transducer for the measurement of thin lubricant film thickness" | 1,3,4 | TECHNICAL FIELDS SEARCHED (Int. Cl.5) G 01 B 7/00 C 10 M 125/00 F 16 C 33/00 F 16 C 17/00 |
| A | US-A-4 139 244 (GUERGUERIAN) * Entire document * | 1 | |
| A | US-A-3 746 407 (STILES) * Figure 1; column 2, line 60 - column 3, line 55 * | 1 | |

The present search report has been drawn up for all claims

| Place of search | Date of completion of the search | Examiner |
|---|---|---|
| THE HAGUE | 17-07-1990 | BROCK T.J. |